Europäisches Patentamt

European Patent Office

Office européen des brevets

(11) Publication number: **0 151 008**
A2

# (12) EUROPEAN PATENT APPLICATION

(21) Application number: 85300528.8

(22) Date of filing: 25.01.85

(51) Int. Cl.⁴: **G 02 B 6/38**

(30) Priority: 27.01.84 US 574777

(43) Date of publication of application: 07.08.85
Bulletin 85/32

(84) Designated Contracting States: **AT BE CH DE FR IT LI NL SE**

(71) Applicant: **RAYCHEM CORPORATION, 300 Constitution Drive, Menlo Park California 94025 (US)**

(72) Inventor: **Shen, Nelson Mu-Chin, 6480 Century Drive, San Jose California 95129 (US)**
Inventor: **Fentress, Vernon Alvin, 4515 Ewing Road, Castro Valley California 94546 (US)**
Inventor: **Tayeb, Abdul, 531 Dowling Boulevard, San Leandro California 94577 (US)**

(74) Representative: **Benson, John Everett et al, Raychem Limited Intellectual Property Law Department Swan House 37-39, High Holborn, London WC1 (GB)**

(54) Light launch detection and splicing devices for loose tube buffered optical fiber.

(57) An apparatus for splicing first and second ends of first and second optical fibers loosely contained within tubes utilizes first and second cylindrical mandrels around which the first and second tubes are tightly wrapped. By tightly wrapping the first and second optical fibers in this manner, a spring action of the first and second fibers within the first and second respective tubes causes an air gap between an outer portion of a buffer of the fibers and an inner portion of the tubes to be eliminated which allows an optical signal to be injected into the first fiber and withdrawn from the second fiber. The intensity of the withdrawn signal is detected, and first and second fiber holders which respectively hold the first and second fibers are moved relative to one another to maximize the detected signal after which ends of the first and second fibers are connected to obtain a minimum splice signal loss.

MP0889-US1

0151008

## BACKGROUND OF THE INVENTION

### Field of the Invention

The present invention relates to a light launch, a
light detection, and a splice device for a loose tube
buffered optical fiber.

### Description of the Prior Art

The most widely used optical fibers comprise a glass
core, a glass cladding which surrounds the core, and a
buffer which surrounds the cladding and is composed of
relatively soft polymeric material. The buffer protects
the cladding and the core and allows the fiber to be bent
into and maintained in a bend of substantially smaller
bend radius than would otherwise be possible. Optical
signals are conventionally fed into optical fibers by
directing the optical signals at an exposed fiber end. It
has also been proposed to feed an optical signal into a
fiber through a side of the cladding, after removal of any
buffer in the path of the fed signal.

It is often desirable to bring two optical fibers
into precise axial alignment so that a signal can be
passed from one fiber to the other with minimum signal loss.
Often the aligned fibers will then be joined together. The
joint can be a permanent joint (usually called a splice)
made by joining the fibers directly to each other, either

MP0889-US1

0151008

by fusing the fibers together or by adhering them to each other with an index-matching adhesive (i.e., an adhesive whose refracive index is chosen so that signal loss is minimized). Alternatively, the joint can be a disconnectable one made by mounting the fiber ends in two mating parts of a connector and then joining the two mating parts together in such a way as to insure alignment of the fibers.

The known methods of aligning optical fibers as defined suffer from serious disadvantages. Most of the known methods align the exteriors of the two fibers, not their cores, whose alignment is a dominant factor in determining the signal loss at the joint. This type of method is very much dependent on operator skills, and in any case, is likely to result in poor results because the fiber core is often not precisely met in the center of the fiber cladding.

It has also been proposed to join the ends of two optical fibers by bringing the ends into approximately aligned and abutting relationship, feeding an optical signal into the remote end of one fiber, detecting the optical signal at the remote end of the other fiber, and moving ends of the fibers to be joined so as to maximize the detected signal, thus precisely aligning the cores. This method is capable of yielding excellent results, but it is wholly impractical because of the need to establish communication links between the alignment point and the remote ends of the fibers.

Borsuk, U.S. Patent 4,215,937, discloses a method in which an optical fiber is centered in one part of a connector, which method includes the step of introducing an optical signal into the fiber through its cladding, without being passed through its buffer. This method is disadvantageous in that portions of the buffers of the fibers being joined are required to be removed for signal injection and signal withdrawal prior to making the splice which weakens the fiber. In addition, these exposed portions of the fibers must be protected subsequent to the formation of the joint to protect the fiber core and cladding from adverse environmental effects.

Campbell, U.S. Serial No. 437,053, filed October 27, 1982, assigned to the assignee of the present invention, the disclosure of which is incorporated herein by reference, discloses a method and apparatus for splicing optical fibers by injecting and withdrawing light to and from the fibers to be joined without removing the fiber buffers. According to this method, a material having an index refraction substantially equal to a buffer of the first fiber is disposed adjacent to the buffer in a vicinity of a bend in the second fiber, and light is injected into the core of the first fiber by being passed through the index-matching material, buffer, and cladding of the first fiber. A second material having an index of refraction substantially equal to the buffer of the second fiber is disposed adjacent to the second fiber buffer in a vicinity of a bend in the second fiber such that light propogating down the core of the second fiber passes out of the core, through the cladding, buffer, and second index-matching material and is detected. Ends of the first and second fibers are moved to maximize a signal level of the withdrawn optical signal, and when optimum positioning of the first and second fibers is achieved, an appropriate splice is made.

Though the method disclosed by Campbell provides an excellent means for splicing first and second fibers having buffers which are directly exposed to the environment, this method cannot be used to splice first and second optical fibers contained loosely within jackets or tubes without; first removing portions of the tubes so that the first and second index-matching materials can be placed adjacent to the buffers of the fibers. Specifically, in the case of a loose tube buffered fiber, such as a SECO 10 optical fiber which is used in France, a small air gap is present between an outer surface of the buffer of the fiber and an inner surface of the tube which prevents light from being injected into the fiber core or being withdrawn therefrom if the index-matching material disclosed by Campbell is placed adjacent to the outer surface of the tube. Accordingly, to make an appropriate splice joint in the manner disclosed by Campbell, portions of the tubes covering the buffered fibers must first be removed which requires that the removed tube portions of the fibers be repaired subsequent to the formation of the joint.

Summary of the Invention

An object of the present invention is to provide a method and apparatus for splicing and joining first and second loose tube buffered fibers together by injecting light into a first one of the fibers through its tube, buffer, and cladding, and by withdrawing light from a second one of the fibers through its cladding, buffer, and tube.

A further object of the invention is to provide an apparatus for injecting light into a loose tube buffered fiber without removing the tube thereof, and to provide an apparatus for withdrawing light from a loose tube buffered fiber without removing the tube thereof.

These and other objects are achieved by tightly wrapping a portion of a first loose tube buffered fiber around a cylindrical member through several turns which causes an outer surface of the buffer to be brought into substantial contact with an inner surface of the tube because the optical fiber tends to spring outwards. Accordingly, any air gap normally existent between the outer surface of the fiber buffer and the inner surface of the tube is eliminated. Therefore, an acceptable amount of light can be injected into the fiber core by illuminating an outer surface of the tube. Conversely, an acceptable amount of light can be withdrawn from the fiber core by similarly wrapping the fiber and tube around another cylindrical member such that the fiber springs out and eliminates any air gap between its buffer and the tube. In the case of withdrawing light from the fiber core, an ellipsoidal reflector is utilized for collecting and focussing the light withdrawn from the fiber core onto a detector.

0151008

## Brief Description of the Drawings

Fig. 1 is an exaggerated perspective view of an optical fiber loosely contained within a tube for which the invention is applicable;

Fig. 2 illustrates a splicing apparatus embodying the present invention;

Fig. 3 illustrates an apparatus for withdrawing light from an optical fiber loosely contained within a tube.

## Description of the Preferred Embodiment

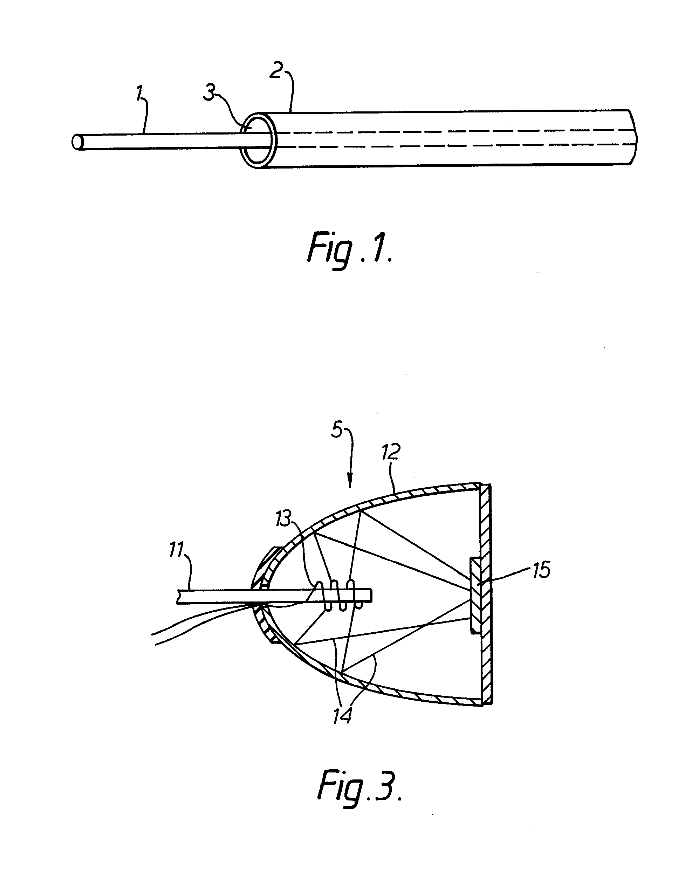

Fig. 1 illustrates an optical fiber 1 which comprises a core surrounded by a cladding which in turn is surrounded by a buffer. The buffered fiber 1 is then loosely contained within a tube 2 such that a gap 3 substantially exists between an inner surface of the tube 2 and an outer surface of the fiber 1. The tube 2 can comprise a sleeve of Kynar typically utilized in SECO 10 optical fiber in France. The dimensions in Fig. 1 have been exaggerated for clarity.

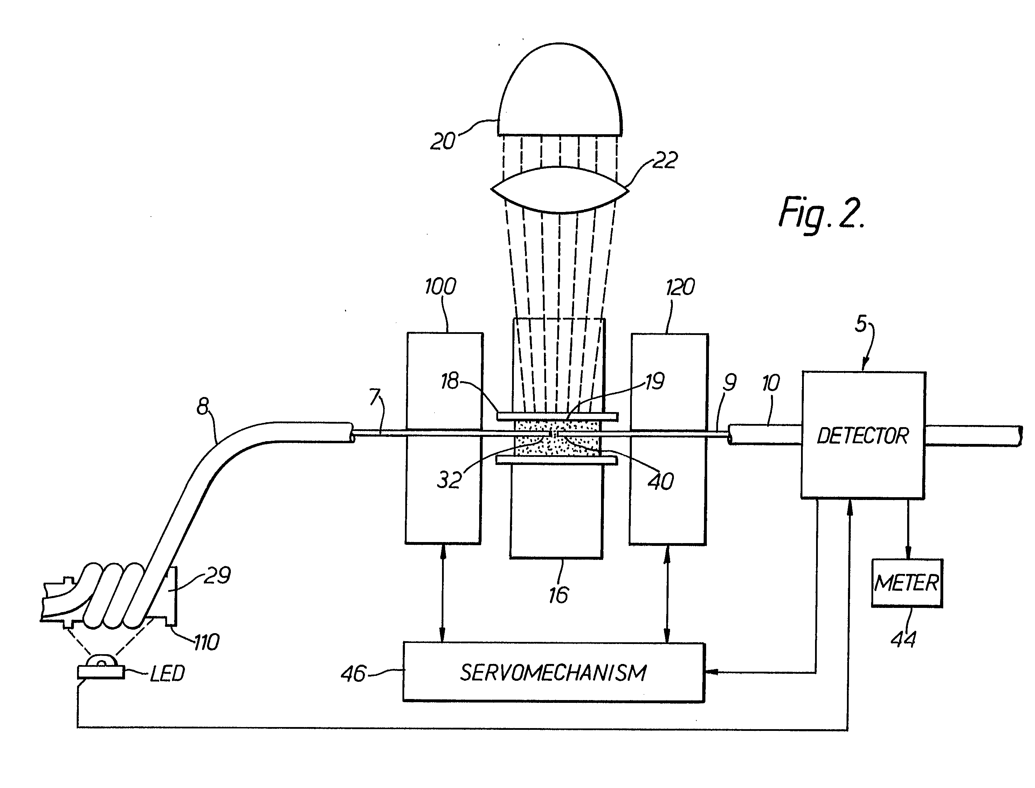

Fig. 2 illustrates a splicing mechanism constructed in accordance with the present invention, and Fig. 3 illustrates a structure of a detector 5 generally illustrated in Fig. 2. The relative sizes of tubes 8, 10 and fibers 7, 9 is exaggerated for clarity.

According to the invention, light is injected into a first fiber 7 which is contained in a ~~tuple~~ *tube* 8, by tightly winding the tube and fiber a plurality of turns around a cylindrical member or mandrel 9 having a stop 10 thereon for limiting axial movement of the tube 8 along an axis of the cylindrical member 9. By wrapping the tube 8 tightly around the cylindrical member 9, an air gap normally existing between an outer surface of the buffer of the first optical fiber 7 and an inner surface of the tube 8 is substantially eliminated in a vicinity of an LED 6 due to spring action of the fiber 7.. Accordingly, by illuminating an outer circumferential section of tube turns 11, a portion of. the light from the LED 6 can be injected into the fiber core 7 through the tube 8. The air gap normally existing between the buffer and the tube is eliminated due to the spring action of the buffered fiber.

Light can be withdrawn from a second fiber 9 to be joined to the first fiber 7 directly through a tube 10 surrounding a buffer of the fiber 9 by an apparatus 5 illustrated in detail in Fig. 3. Specifically, the tube 10 is again tightly wound around another cylindrical member 11, for example, a mandrel, which can be identical to the cylindrical member 9, which causes an outer surface of a buffer surrounding the fiber 9 to spring radially outwards and substantially come into contact with an inner surface of the tube 10 to eliminate any air gap normally existing therebetween. Since the fiber 9 is tightly wound around the cylindrical member 11, a portion of the light propogating down the fiber 9 exists therefrom and through the cladding, buffer and tube surrounding the core $\beta$. An ellipsoidal

MP0889-US1

0151008

reflector 12 is disposed around turns 13 of the tube 10 such that the turns 13 are substantially located at a first focus point of the ellipsoidal reflector which causes light rays 14 originating from the fiber 9 to be substantially reflected towards a second focus point of the ellipsoidal reflector 12. A detector 15 is placed at a second focus point to collect the light rays and the detector 15 is in turn connected to a meter (Fig. 2) for determining an intensity of the light withdrawn from the fiber 9. The ellipsoidal reflector is required since the tube 10 acts as an optical diffuser. Such an ellipsoidal reflector is capable of effectively collecting approximately 20% of the total light being guided down the core $f$.

A preferred technique for joining the aligned fibers is by supplying a hardenable, fluid, index-matching adhesive to the ends of the aligned fibers. Preferably the adhesive is polymerisable (this term being used to include adhesives which are already polymers but which can be further polymerised or cross-linked). The adhesive may be self-setting (e.g. a two-component epoxy or cyanoacrylate adhesive) but is preferably one which polymerises only when exposed to selected treatment after the fibers have been aligned. Particularly useful are photo-polymerisable adhesives which can be cured by exposure to UV light, for example a photo-initiated urethane/acrylate adhesive. Other hardenable adhesives can be used, including thermoplastic materials, for example butyrate resins. However, thermoplastic materials must be maintained at an elevated temperature until the fibers have been aligned. The hardened adhesive will usually have a refractive index which is not substantially less than that of a fiber core, i.e., at least 1.4, preferably at least 1.5, and will be transparent to radiation of at least one of the frequencies used as a signal in optical fibers (typically 810-860, 1280-1320 and 1450-1550 nanometers). The adhesive can be delivered to the exposed fiber ends 32, 40 by being contained in a tubular monolithic straight container having two open ends, a small internal cross-sectional dimension of the container being at least 300 microns, and the smallest internal cross-section of the radius of curvature of the container preferably being at least 125 microns.

To form a splice, the fibers 7, 9 are pushed into the adhesive within the container and are then aligned within the container. The container may be composed of, for example, quartz glass, metal or a polymeric composition, provided that it permits (and is not damaged by) the desired process for hardening the adhesive. An advantage of this technique is that fluid flow of the adhesive about the fibers as they are inserted into the adhesive helps to ensure that the fiber ends are free of foreign matter. Another advantage is that it is not necessary to strip the buffer from the fiber end (though this can be done if desired).

The internal dimensions of the container should be such as to allow adequate movement of the fibers during the alignment process. The fiber buffers preferably lie within the mass of adhesive, and therefore the smallest internal cross-sectional dimension of the container is preferably at least 1.2, e.g. 1.6 times, especially 1.5 to 6, e.g. 3 to 6 times, the external diameter of the buffer of the fiber. The larger the smallest internal cross-sectional dimension, the wider the range of fiber sizes for which a particular container will be suitable, but the greater the difficulty of retaining a polymerizable adhesive within the container. In view of these considerations, the smallest internal cross-sectional dimension is preferably at least 300 microns, for example at least 400 microns, particularly at least 750 microns, especially at least about 1000 microns, but preferably less than 3000 microns, especially less than 1500 microns, e.g. 750 to 1500 microns. When the container has an annular cross-section, as is preferred, the smallest internal cross-sectional dimension is of course the internal diameter of the container. The hardenable adhesive used in the novel splicing aid preferably has a viscosity such that it is retained in the container at 23°C with the container horizontal, and more preferably under all other conditions likely to be encountered before the adhesive is hardened. On the other hand, its viscosity should not be such that it is difficult to insert and move the optical fibers under the splicing conditions. We prefer to use an adhesive having a viscosity of 750 to 2500 centipoise, particularly 1200 to 2000 centipoise, e.g. about 1600 centipoise (viscosities referrred to herein are measured at 23°C using a Model HBT Brookfield Viscometer, Spindle No. SC4-27 rotating at 100 rpm).

The adhesive may alternatively be retained in, for example, a small polymeric bulb attached (or capable of attachment) to one of the ends of the container, and be dispensed into the container when the container is to be used. This offers particular advantage if a two-component adhesive is used, since a two-part bulb may be employed.

Another technique for joining the aligned fibers is by fusing together the ends of the fibers. Known techniques, e.g., use of an electric arc, are suitable for this purpose. However, these techniques require a high degree of operator skill and require the buffer to be stripped from the fibers.

After splicing the optical fibers together, the splice can if desired be protected by shrinking a heat-shrinkable polymeric sleeve over the splice.

To insure an optimum alignment of the fibers 7,19, the first fiber 7 is held by a first adjustable holding means 100 which precisely positions the first fiber end 32, and a second adjustable holding means 120 is utilized for holding the second optical fiber 9 to precisely position the second fiber end 40 which confronts and is substantially in alignment with the first fiber end 32. The fiber ends 32, 40 are inserted into a tube 18 containing the above-described resin 19, and subsequently light from the LED 6 is injected into the first fiber 7. In addition, light being propagated down the first fiber 7 from the LED 6 enters the second fiber 9 through its end 40 and is detected by the detector 15, as described above. The signal received by the detector 15 can be displayed on a meter 44 and/or can be fed to a servo- mechanism 46 which is linked to the adjustable holding means 100, 120 and by means of which the holding means 100, 120 are automatically adjusted relative to each other in order to maximize the detective signal, thus providing for alignment of the fibers 7, 9 without calling for high skill from the operator. The detector 15 and the LED 6 are preferably linked to each other so that the intensity of the generated signal is automatically adjusted to a level at which the detected signal lies in the range of maximum sensitivity of the detector 15 and preferably also so that the detector 15 ignores unwanted variations in the intensity of the generated signal. The apparatus illustrated in Fig. 2 further comprises a UV light source 20 and an associated focusing means such as lens 22. When the fiber ends 32, 40 have been precisely aligned, the UV light source is switched on for a time sufficient to cure the adhesive 19.

-14-                          0151008

We claim:

1.   An apparatus for aligning ends of first and
second optical fibers, each fiber comprising a core, a
cladding surrounding the core, and a buffer surrounding
the cladding, each fiber being loosely contained within
a tube, comprising:

first holding means for holding a first fiber
near an end thereof;

first wrapping means for tightly wrapping a
first portion of said first fiber so that an outer
surface of said buffer of said first fiber is substantially
in contact with an inner surface of said tube containing
said first fiber;

means for generating an optical signal in a
vicinity of said first portion of said first fiber so
that a part of said signal passes through said tube,
buffer, cladding, and into said core of said first fiber;

second holding means for holding a second fiber
near an end thereof in a position in which said end of
said second fiber is approximately abutting and axially
aligned with said end of said first fiber held by said
first holding means;

means for withdrawing an optical signal propogating in said core of said second fiber through said cladding, buffer, and tube of said second fiber;

means for detecting an intensity of said withdrawn signal;

means for moving at least one of said first and second holding means in relation to the other so as to maximize said withdrawn optical signal detected by said detecting means to obtain precise axial alignment of said cores of said first and second fibers.

2. The apparatus as claimed in claim 1, said withdrawing means comprising means for tightly wrapping a second portion of said second fiber so that an outer surface of said buffer of said second fiber is substantially in contact with an inner surface of said tube containing said second fiber so that a part of said withdrawn signal passes through said cladding, buffer, and tube off said second fiber.

3. The apparatus as claimed in claim 2, further comprising means for collecting and focussing said withdrawn optical signal prior to detecting said intensity of said withdrawn optical signal.

4. The apparatus as claimed in claim 3, said collecting and focussing means comprising an ellipsoidal reflector, said second part of said second fiber being located in a vicinity of a first focus point of said reflector, said detecting means being placed in a vicinity of a second focussing point of said detector.

5. The apparatus as claimed in claim 4, said first wrapping means comprising a first cylindrical mandrel.

6. The apparatus as claimed in claim 5, said mandrel having a flange thereon limiting movement of said first portion of said first fiber along a longitudinal axis of said mandrel.

7. The apparatus as claimed in claim 5, said second wrapping means comprising a second cylindrical mandrel.

8. The apparatus as claimed in claim 1, further comprising at least one loose tube which surrounds at least one of said first and second fiber portions to facilitate straightening out said at least one of said first and second fiber portions.

9. The apparatus as claimed in claim 7, said first and second fibers being respectively wrapped around said first and second mandrels a plurality of turns.

10. A method for aligning ends of first and second optical fibers, each fiber comprising a core, a cladding surrounding the core, and a buffer surrounding the cladding, each fiber being loosely contained within a tube, comprising the steps of:

holding said first fiber near an end thereof;

0151008

tightly wrapping a first portion of said first fiber so that an outer surface of said buffer of said first fiber is substantially in contact with an inner surface of said tube containing said first fiber;

generating an optical signal in a vicinity of said first portion of said first fiber so that a part of said signal passes through said tube, buffer, cladding, and into said core of said first fiber;

holding a second fiber near an end thereof in a position in which said end of said second fiber is approximately abutting and axially aligned with said end of said first fiber;

withdrawing an optical signal propagating in said second core of said second fiber through said cladding, buffer, and tube of said second fiber;

detecting an intensity of said withdrawn optical signal;

moving at least one of said first and second holding means in relation to the other so as to maximize said withdrawn optical signal and to obtain precise axial alignment of said cores of said first and second fibers.

11. The method as claimed in claim 10, further comprising the step of tightly wrapping a second portion of said second fiber to facilitate said withdrawal of said optical signal propagating in said second fiber.

12.   The method as claimed in claim 11, further comprising the step of collecting and focussing said withdrawn
optical signal prior to detecting said intensity of said
withdrawn optical signal.

13.   The method as claimed in claim 12, further comprising the step of locating said second portion of said
second fiber in a vicinity of a first focus point of an
ellipsoidal reflector; and

placing a detector in a vicinity of a second focus
point of said ellipsoidal reflector.

14.   An apparatus for detecting an optical signal in
an optical fiber comprising a core, a cladding surrounding
the core and a buffer surrounding the cladding, said optical
fiber being loosely contained within a tube, comprising:

means for tightly wrapping a portion of said fiber
so that an outer surface of said buffer is substantially
in contact with an inner surface of said tube so as to
withdraw at least part of said optical signal from said
core through said cladding, buffer, and tube; and

means for detecting said withdrawn signal.

15.   The apparatus as claimed in claim 14, further
comprising means for collecting and focussing said withdrawn signal on a detecting means.

16. The apparatus as claimed in claim 15, said wrapping means comprising a cylindrical mandrel, said fiber being wrapped around said mandrel a plurality of turns.

17. The apparatus as claimed in claim 16, said mandrel including a stop for limiting movement of said fiber turns along a longitudinal axis of said mandrel.

18. An apparatus for injecting an optical signal into a core of an optical fiber, said fiber comprising a core, a cladding surrounding the core, and a buffer surrounding the cladding, said fiber being loosely contained within a tube, comprising:

means for tightly wrapping a portion of said fiber so that an outer surface of said buffer is substantially in contact with an inner surface of said tube; and

means for generating an optical signal in a vicinity of said fiber portion so that a portion of said signal passes through said tube, buffer, cladding, and into said core of said fiber.

19. The apparatus as claimed in claim 18, said wrapping means comprising a cylindrical mandrel, said fiber being wrapped around said cylindrical mandrel a plurality of turns.

MP0889-US1

0151008

20. The apparatus as claimed in claim 19, said cylindrical mandrel including a stop for eliminating movement of said fiber turns along a longitudinal axis of said mandrel.

0151008

Fig.1.

Fig.3.

Fig.2.

0151008